# EUROPEAN PATENT APPLICATION

(11) **EP 1 564 192 A1**
(43) Date of publication of application: **17.08.2005**
(21) Application number: 03770010.1
(22) Date of filing: 30.10.2003
(51) Int. Cl.: C03C 17/25, B05D 7/00, B05D 7/24

(54) **METHOD OF FORMING THIN FILM ON GLASS SUBSTRATE AND GLASS SUBSTRATE COATED WITH THIN FILM**

(30) Priority: 30.10.2002 JP 2002315258
(71) Applicant: Nippon Sheet Glass Co., Ltd., Osaka-shi, Osaka 541-8559 (JP); Matsushita Electric Works, Ltd., Kadoma-shi, Osaka-fu 571-8686 (JP)
(72) Inventor: OBANA, Shigeki, c/o NIPPON SHEET GLASS CO., LTD., Osaka-shi, Osaka 541-8559 (JP); TANAKA, Keisuke, c/o NIPPON SHEET GLASS CO., LTD., Osaka-shi, Osaka 541-8559 (JP); TANAKA, Hirokazu, c/o NIPPON SHEET GLASS CO., LTD., Osaka-shi, Osaka 541-8559 (JP); TSUJIMOTO, Akira, Matsushita Electric Works, Ltd., Kadoma-shi, Osaka 571-8686 (JP); TAMARU, Hiroshi,c/o Matsushita Electric Works, Ltd, Kadoma-shi, Osaka 571-8686 (JP); TAKAHAMA, Kouichi, Matsushita Electric Works, Ltd., Kadoma-shi, Osaka 571-8686 (JP)
(74) Representative: Golding, Louise Ann
(86) International application number: PCT/JP2003/013905
(87) International publication number: WO 2004/039739

(57) **Abstract**

A process of forming a functional thin film uniformly on the surface of a large size glass substrate, which is used for construction or the like, and a glass substrate coated with a thin film formed by the above process are provided. A uniform metal oxide thin film is formed by: using large size plate glass produced by the float bath process, in which molten glass is poured into an Sn bath and gradually hardened; and applying by spraying a coating solution containing an alcohol as a solvent and 5% by mass to 15% by mass of water onto the bottom surface of the large size plate glass, which is formed by bringing the molten glass into contact with the Sn bath, while controlling the wettability of the coating solution on the glass substrate.

## Description

### Technical Field

The present invention relates to a process of forming a uniform thin film on the surface of a large size glass substrate, which is used for construction or the like, and a glass substrate coated with a thin film formed by the above process.

### Background Art

A thin film has been formed on the surface of a large size glass substrate, which is used for construction or the like, so as to add various functions, such as UV shielding, heat shielding, electricity conducting, stainproofing, hydrophilization, water repelling and coloring, to the glass substrate. As processes of forming such a functional thin film, there have been known two types of processes: dry processes in which a solid thin film is directly formed on a substrate; and wet processes in which a thin film is formed in such a manner as to coat a coating solution on a substrate, dry the resultant liquid film, and heat treat the dried film. In the formation of a functional thin film, wet processes, which use coating solutions capable of having various compositions, are used very often as attractive processes. A spin coating method, a roll coating method, a flow coating method, a dipping method, and a spraying method are known as typical examples of wet processes.

The spin coating method is a process of forming a thin film on the surface of a glass substrate by dropping a coating solution onto the substrate while rotating the same at high frequency to uniformly spread the solution onto the surface of the glass substrate. This process, however, cannot be substantially used to apply a coating onto a large size glass substrate, which is used for construction, because to provide a coating on a large size glass substrate, the size of apparatus used must be large, and moreover, to rotate a glass at high frequency while holding the same, large-scale holding equipment is required and safety measures must be taken.

The roll coating method is a process of forming a thin film on the surface of a glass substrate by bringing a coating roll in contact with the surface of the substrate while conveying the substrate. In this case, the surface level of the substrate must be kept constant so that the entire coating roll can come in contact with the glass substrate. However, when handling a large size glass substrate, the width of the coating roll used becomes large, and therefore the coating applied is largely affected by the distortion of the coating roll or the like and is likely to be a non-uniform thin film.

The flow coating method is a process of forming a thin film on a glass substrate by dropping a coating solution uniformly across the width of the glass substrate while conveying the glass substrate. In this process, to form a uniform thin film, the coating solution is required to have high viscosity. If the viscosity of the coating solution is low, non-uniformity occurs across the width of the substrate or in the direction in which the substrate is conveyed. Thus, coating solutions applicable are limited.

The dipping method is a process of forming a thin film on a glass substrate by dipping the glass substrate into a coating solution and withdrawing the same. To form a uniform thin film by this process, control of withdrawing speed, prevention of vibration, control of atmosphere, etc. are indispensable at the time of withdrawing operation. Besides, this process has a problem of low productivity because the withdrawing speed cannot be very high and, when the substrate requires a coating only on one side, a masking step is required.

The spraying method is a process of forming a thin film on a glass substrate by spraying a coating solution on the surface of the glass substrate while conveying the same. This process is most suitable for forming a film on a large size glass substrate, which is used for construction or the like from the viewpoint of productivity. However, in a large size glass substrate, it is difficult to spray a uniform amount of coating solution throughout the substrate surface, and therefore appearance non-uniformity often occurs. To obtain a uniform thin film, it is important to control the surface temperature of the glass substrate.

There is disclosed a process of forming a titanium oxide film on a glass substrate by spraying an aqueous solution of titanic acid on the surface of a glass ribbon between the outlet of a float bath and the end of the forming process and using the heat possessed by the glass substrate (Japanese Patent Laid-Open No. 2001-80939). However, the aqueous solution of titanic acid rapidly evaporates since the temperature of the glass substrate is high, whereby it is difficult to form a thin film of uniform thickness.

As described so far, a uniform thin film has been difficult to form on the surface of a large size glass substrate, which is used for construction or the like, by wet processes.

Accordingly, the object of the present invention is to provide a process of forming a functional thin film uniformly on a surface of a large size glass substrate, which is used for construction or the like, and a glass substrate coated with a thin film formed by the above process.

### Disclosure of the Invention

The first aspect of a process of forming a thin film on a glass substrate in accordance with the present invention is a process of forming a thin film on a large size glass substrate by spraying, the process comprising the steps of preparing, as the large size glass substrate, plate glass produced by a float bath process in which molten glass is poured into an Sn bath and gradually hardened, applying a coating solution containing an alcohol as a solvent onto the bottom surface of the plate glass, which is formed by bringing the molten glass into contact with the Sn bath, by spraying, and forming a metal oxide thin film.

The second aspect of a process of forming a thin film on a glass substrate in accordance with the present invention is a process of forming a thin film on a large size glass substrate by spraying, the process comprising the steps of applying a coating solution containing an alcohol as a solvent and water of from 5% by mass to 15% by mass onto the large size glass substrate by spraying, while controlling the wettability of the coating solution on the glass substrate, and forming a metal oxide thin film.

The third aspect of a process of forming a thin film on a glass substrate in accordance with the present invention is a process of forming a thin film on a large size glass substrate by spraying, the process comprising the steps of preparing, as the large size glass substrate, plate glass produced by a float bath process in which molten glass is poured into an Sn bath and gradually hardened, applying a coating solution containing an alcohol as a solvent and water of from 5% by mass to 15% by mass onto the bottom surface of the plate glass, which is formed by bringing the molten glass into contact with the Sn bath, by spraying, while controlling the wettability of the coating solution on the glass substrate, and forming a metal oxide thin film.

In the above-described processes of forming a thin film, it is preferable that the water contained in the coating solution is added after an alcohol solution of a metal oxide raw material is prepared. This makes non-uniformity less likely to occur in the resultant thin film.

When the above metal oxide thin film is a thin film that comprises titanium oxide and/or silicon oxide, stainproof function can be added to the glass substrate. And preferably, spray coating of the above coating solution is performed while keeping the temperature of the glass substrate at 35°C or lower and then the temperature of the glass substrate surface is raised to 100°C to 300°C. The glass substrate coated with a thin film of the present invention produced in such a manner can be used in various applications depending on the kind of the function of the thin film.

### Brief Description of the Drawing

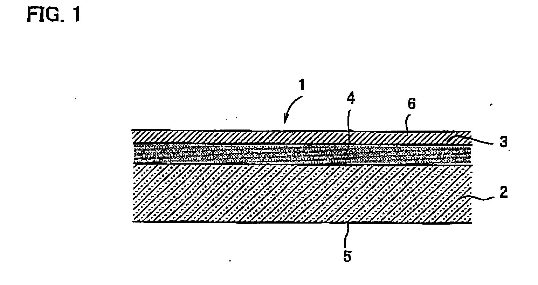

Figure 1 is a cross-sectional view of one example of a glass substrate produced by a float bath process.

### Best Mode for Carrying Out the Invention

The embodiments of the present invention will be described with reference to the accompanying drawing.

Figure 1 is a cross-sectional view of one example of a glass substrate produced by a float bath process. A glass substrate 1 is formed by floating a continuous stream of molten glass on a tin (Sn) bath and slowly hardening the same, and therefore there exists a tin-oxide diffusion layer 4 on the bottom surface 3 of a float glass 2, which is formed by bringing the molten glass into contact with the Sn bath. The diffusion layer 4 is such that the concentration of tin oxide (SnO₂) is highest on its bottom surface and the concentration of the same becomes lower at deeper portions of the float glass. Typically, the SnO₂ concentration is about 30% by weight at portions 1 to 2 nm apart from the bottom surface, about 5% by weight at portions 100 nm apart from the bottom surface and about 1% by weight at portions 2000 nm apart from the bottom surface.

The surface opposite to the bottom surface 3 is referred to as a top surface (also referred to as a forged surface) 5, where the float glass 2 is exposed. When viewed as an apparatus for use in a float bath process, the drawing of figure 1 is upside down; however, the present inventors intentionally do it, since spray coating is performed on the bottom surface of the float glass in the present invention. Most of the glass substrates produced are large size ones whose width is 2 m or more.

The first aspect of a process of forming a thin film on a glass substrate in accordance with the present invention is a process in which a metal oxide thin film 6 is formed on the bottom surface 3 by spray coating the same with a coating solution containing an alcohol as a solvent. Spray coating the bottom surface with a coating solution containing an alcohol as a solvent makes the resultant thin film 6 more likely to be uniform.

The mechanism of producing a uniform thin film is probably as follows. Droplets of a coating solution sprayed on the surface of a substrate spread on the substrate, and are joined to each other to be a uniform liquid film. The film is dried and solidified to form a thin film having uniform thickness and appearance. In other words, wettability (contact angle) of a coating solution on a substrate largely affects the uniformity of the resultant thin film.

If the wettability of a coating solution on a substrate is too high (the contact angle is too small), the droplets of the coating solution spread out immediately after they reach the substrate and their surface area is rapidly increased. As a result, the solvent evaporates rapidly, and the droplets are solidified before they are joined to each other, which results in production of a thin film having non-uniform thickness and appearance. On the other hand, if the wettability of a coating solution on a substrate is too low (the contact angle is too large), the droplets of the coating solution spread too slow to form a uniform liquid film, which results in production of a thin film having non-uniform thickness and appearance.

When the coating solution and substrate are in a certain wettable relation, the speed of droplets' spread and the speed of solvent' evaporation are well balanced, whereby a uniform liquid film is formed, resulting in production of a thin film having uniform thickness and appearance.

The bottom surface 3 has a tin oxide diffusion layer 4 formed on it, and therefore the concentration of tin oxide is high there. This means the wettability of water, alcohol, etc. on the bottom surface 3 is lower than that on the top surface 5 (the contact angle is larger). Thus, the wettability of the coating solution is properly controlled, and a uniform coating is attained

The second aspect of a process of forming a thin film on a glass substrate in accordance with the present invention is a process in which a metal oxide thin film is formed on the glass substrate by spray coating the same with a coating solution containing an alcohol as a solvent and water of from 5% by mass to 15% by mass while controlling the wettability of the coating solution on the glass substrate. Addition of the above described amount of water to alcohol allows the speed of droplets' spread and the speed of solvent' evaporation to be balanced, whereby a uniform liquid film is formed, resulting in production of a thin film having uniform thickness and appearance.

Addition of water to an alcohol solvent, such as methanol or ethanol, whose boiling point is lower than that of water raises the apparent boiling point of the solvent, there preventing the solvent from rapidly evaporating on the glass substrate. Further, addition of water increases the surface tension of the coating liquid, thereby decreasing the wettability of the coating solution on the glass substrate, which inhibits the droplets of the coating solution from rapidly spread on the glass substrate. These two effects allow the coating solution having been sprayed on the glass substrate to form a uniform liquid film, whereby a thin film having uniform thickness and appearance is formed. An alcohol such as methanol or ethanol and water are uniformly miscible with each other, and non-uniformity between them never occurs in the coating solution. Thus, addition of water to an alcohol solvent is preferably employed.

The content of water in the coating solution that contains alcohol as a solvent is from 5% by mass to 15% by mass. If the amount of water added is less than 5% by mass, the wettability of the coating solution on the glass substrate becomes too high; as a result, the droplets of the coating solution spread out on the glass substrate immediately after they come in contact with the substrate. And the sol-gel solution coated in a small amount on the glass substrate so as to form a thin film on the substrate rapidly evaporates, which results in formation of a non-uniform thin film on the surface of the glass substrate. Thus, the amount of water added less than 5% by mass is not preferable. On the other hand, if the amount is more than 15% by mass, the wettability of the sol-gel solution on the glass substrate becomes too low, the droplets of the coating solution does not sufficiently spread on the substrate even after they come in contact with the glass substrate, and the solvent evaporates in the non-uniform liquid film state, which results in formation of a non-uniform thin film. Thus the amount of water added more than 15% by mass is not preferable, either.

The coating solution used in the present invention contains an alcohol such as methanol, ethanol or 2-propanol, as a solvent, and any one of metal alkoxide, a metal hydroxide colloid and metal oxide particles or the mixture thereof, as a metal oxide source. Coating solutions containing metal alkoxide include: for example, a solution for silicon oxide film formation, "Lixon Coat" by Chisso Corporation, that contains 6% by mass of silicon alkoxide and methanol as a solvent; and a solution for titanium oxide-silicon oxide film formation, "CG-19Ti" by DAIHACHI CHEMICAL INDUSTRY CO., LTD., whose (Ti/Si) molar ratio is (20/80) and whose solid content is 10% by mass. Titanium oxide particles may be dispersed in these coating solutions so as to increase the amount of titanium oxide.

To form a hydrophilic thin film which is aimed at stainproofing, for example, a coating solution is used which contains methanol, as a solvent, and a Ti compound such as titanium alkoxide and/or a Si compound such as silicon alkoxide. A thin film 6 containing titanium oxide and/or silicon oxide is formed by applying such a coating solution onto the glass substrate and calcining the resultant liquid film. If a glass substrate having a thin film containing titanium oxide and/or silicon oxide formed on its surface is used for window glass etc., the window glass performs what is called the self-cleaning function (stainproofing function), the function of washing away dirt and dust stains adhering to the window glass with rainfall, the stains can be removed.

The third aspect of a process of forming a thin film on a glass substrate in accordance with the present invention is a combination of the first and the second processes in which a metal oxide thin film is formed on the bottom surface 3 by spray coating the same with a coating solution containing an alcohol as a solvent, and besides, water of from 5% by mass to 15% by mass while controlling the wettability of the coating solution on the glass substrate.

In any one of the above-described processes of forming a thin film on a glass substrate, it is preferable to add water to be contained in the coating solution after a solution of a metal oxide raw material in alcohol has been prepared. Following this order makes non-uniformity less likely to occur in the resultant thin film.

In any one of the above-described processes of forming a thin film on a glass substrate, it is preferable to remove organic matter adhering to the surface of the glass substrate before spray coating the same with a coating solution. One example of methods for removing such organic matter is to wash the surface of the glass substrate with cerium oxide etc. Removing organic matter adhering to the surface of the glass substrate makes the wettability of the coating solution stable, and besides, makes it easy to form a uniform thin film throughout the substrate.

Preferably, the coating solution is applied by spraying onto the glass substrate while keeping the temperature of the substrate surface at 35°C or lower and preferably at 10 to 30°C. If the temperature of the glass substrate surface is higher than 35°C, the evaporation speed of the solvent in the coating solution becomes so high that a uniform thin film cannot sometimes be produced Keeping the temperature of the substrate at 35°C or lower inhibits the non-uniformity of the evaporation speed of the solvent and makes it easy to form a uniform thin film.

It is also preferable to apply by spraying the coating solution onto the glass substrate while keeping the temperature of the substrate surface at 35°C or lower and then raise the temperature of the glass substrate surface to 100°C to 300°C. This heating enhances the strength of the resultant thin film and makes the film more durable. Heating temperature lower than 100°C is not preferable because under such low temperatures, the effect of heating is small; as a result, a film having sufficient strength cannot be obtained and the adhesion strength between the glass substrate and the film becomes low. Heating temperature higher than 300°C is not preferable, either, because heating at such high temperatures often causes the glass substrate to break during the cooling operation after the heating. And if the glass substrate having been heated at such high temperatures is annealed under such conditions that do not cause the breaking of the substrate, the productivity is lowered. Heating can be performed by any of known methods. Such methods include: for example, infrared heating using an electric furnace or a gas furnace.

The thin film-coated glass substrate of the present invention produced in the above described manner has a functional film preferably 50 to 500 nm thick uniformly formed on its large size glass substrate. Types of functional films include: for example, hydrophilic or photocatalytic films aimed at stainproofing; UV shielding films; heat shielding films; electricity conducting films; water repellent films; and coloring films.

In the following the present invention will be described by examples, however, it is to be understood that the following examples are not intended to limit the present invention. Examples and Comparative Examples are summarized in a Table.

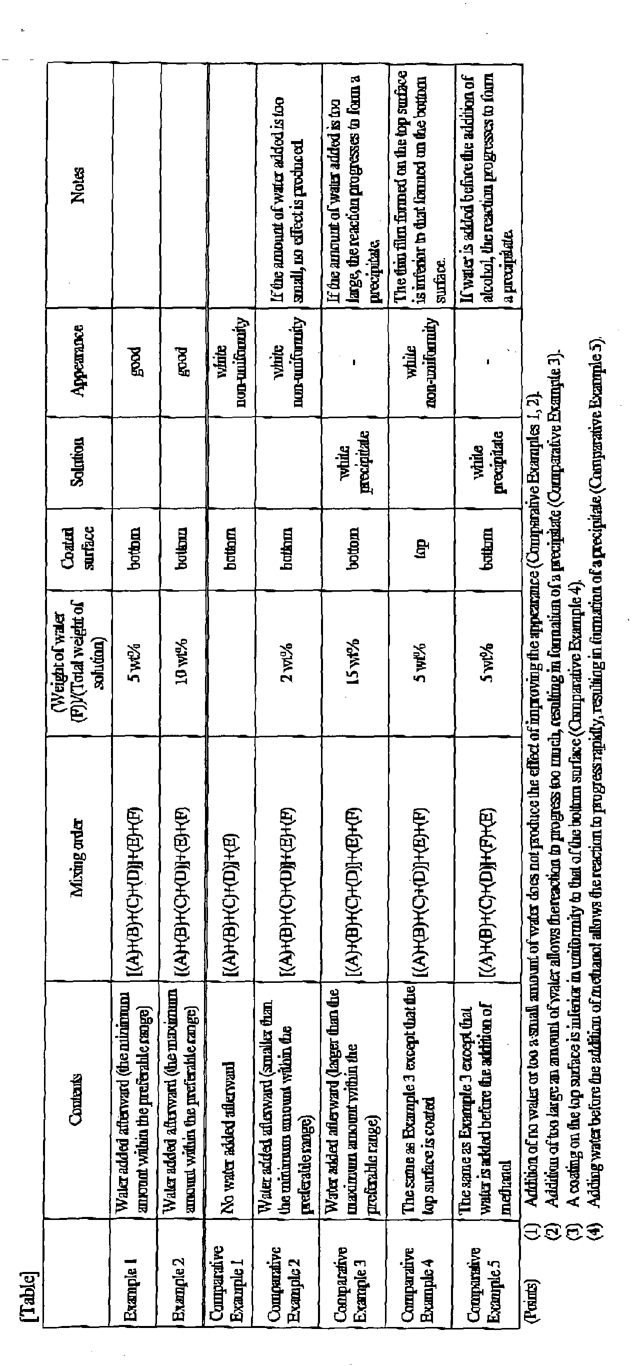

In the above table, the raw materials for the solution, the mixing ratio of the raw materials and the mixing procedure of the same are as follows.
(1) As raw materials for the solution, the following (A) to (F) were used.
   (A) A compound containing titanium oxide particles
      (e.g.) a zol of titanium oxide in water (solid content 20% by weight)
   (B) Silicone resin
      (e.g.) tetraethoxysilane + methanol + water + diluted hydrochloride
      → 60°C/2hr heating → average molecular weight 950
   (C) Zirconium alkoxide
      (e.g.) Zr(OC₄H₉)₃(C₅H₇O₂), Zr(OC₄H₉)(C₅H₇O₂)(C₆H₉O)₂
   (D) Colloidal silica
      (e.g.) a zol of silica in methanol (solid content 20% by weight)
   (E) Methanol
   (F) Water
(2) The mixing ratio was as follows.
   Solid content ratio
   (weight of TiO₂) : (weight of Zr-containing compound) : (weight of silicone resin) : (weight of SiO₂ particles) =1 : 0.05 : 1 : 0.5
   (weight of Zr-containing compound)/(weight of TiO₂) = 0.05
   (weight of SiO₂ particles)/(weight of TiO₂) = 0.5
   (total weight of solid contents in solution) : (total weight of solution) : 1 : 100
(3) The mixing procedure was as follows.
   1) Mix the solutions (A) to (D) each containing solid contents.
   2) Dilute the mixture with methanol.
   3) Finally, add water to the diluted mixture.
   4) Keep the mixture at room temperature for 1 hr or more.

### Industrial Applicability

The process of forming a thin film on a glass substrate in accordance with the present invention is: a process in which a thin film is formed by spray coating the bottom surface of a large size glass substrate with a coating solution containing an alcohol, as a solvent, a process in which a thin film is formed by spray coating the bottom surface of a large size glass substrate with a coating solution containing an alcohol, as a solvent, together with water, or the combination thereof. By any of the above processes, the evaporation speed and the spread speed of the coating solution are properly controlled and a uniform thin film can be formed.

Removing organic matter adhering to the glass surface, as pretreatment operation, and adjusting the temperature of the glass substrate, as a coating conditions, to 35°C or lower make it possible to form a more uniform thin film.

The thin film-coated glass substrate of the present invention obtained by the above described process of forming a thin film is of large size and has uniform appearance and functions, and therefore it can be suitably used in various applications such as window glasses for high-rise buildings or average homes or daylighting glasses.

## Claims

1. A process of forming a thin film on a large size glass substrate by spraying comprising the steps of:
preparing, as the large size glass substrate, plate glass produced by a float bath process in which molten glass is poured into an Sn bath and gradually hardened;
applying a coating solution containing an alcohol as a solvent onto the bottom surface of the plate glass, which is formed by bringing the molten glass into contact with the Sn bath, by spraying; and
forming a metal oxide thin film.

2. A process of forming a thin film on a large size glass substrate by spraying comprising the steps of:
applying a coating solution containing an alcohol as a solvent and water of from 5% by mass to 15% by mass onto the large size glass substrate by spraying; and
forming a metal oxide thin film.

3. A process of forming a thin film on a large size glass substrate by spraying comprising the steps of:
preparing, as the large size glass substrate, plate glass produced by a float bath process in which molten glass is poured into an Sn bath and gradually hardened;
applying a coating solution containing an alcohol as a solvent and water of from 5% by mass to 15% by mass onto the bottom surface of the plate glass, which is formed by bringing the molten glass into contact with the Sn bath, by spraying; and
forming a metal oxide thin film.

4. The process of forming a thin film on a glass substrate according to any one of claims 1 to 3, wherein among the water contained in the coating solution, the water of from 5% by mass to 10% by mass with respect to the total coating solution is added after an alcohol solution of a metal oxide raw material is prepared.

5. The process of forming a thin film on a glass substrate according to any one of claims 1 to 4, wherein the metal oxide thin film comprises titanium oxide and/or silicon oxide.

6. The process of forming a thin film on a glass substrate according to any one of claims 1 to 4, wherein the coating solution comprises titanium alkoxide and/or silicon alkoxide.

7. The process of forming a thin film on a glass substrate according to any one of claims 1 to 6, wherein the coating solution comprises titanium oxide fine particles and/or silicon oxide fine particles.

8. The process of forming a thin film on a glass substrate according to any one of claims 1 to 7, wherein the coating solution is applied by spraying onto the glass substrate while keeping the surface temperature of the glass substrate at 35°C or lower.

9. The process of forming a thin film on a glass substrate according to any one of claims 1 to 8, wherein the coating solution is applied by spraying onto the glass substrate while keeping the surface temperature of the glass substrate at 35°C or lower and then the surface temperature of the glass substrate is raised to 100°C to 300°C.

10. A glass substrate coated with a thin film, wherein the substrate is produced by the process according to any one of claims 1 to 9.
